# EUROPEAN PATENT APPLICATION

(11) **EP 1 785 848 A1**
(43) Date of publication of application: **16.05.2007**
(21) Application number: 05300839.7
(22) Date of filing: 20.10.2005
(51) Int. Cl.: G06F 9/44, G06F 9/45

(54) **Method and apparatus for semantic checking of program code**

(71) Applicant: Hewlett-Packard Development Company, L.P., Houston, TX 77070 (US)
(72) Inventor: Pofelski, Lech, 38053, Grenoble Cedex 9 (FR)
(74) Representative: Lloyd, Richard Graham

(57) **Abstract**

A method is provided of checking program code of an appl ication-program, which references external domain-source-definitions. The checking method pertains to the references from the application-program to the external domain-source-definitions and is performed by means of an inference engine being supplied with an application-program knowledge base, a domain-source-definition knowledge base and checking rules. The program code of the application-program is translated into the application-program knowledge base. The external domain-source-definitions are translated into the domain-source-definition knowledge base. Checking rules are defined. The inference engine is run on the application-program knowledge base, on the domain-source-definition knowledge base and on the defined checking rules in order to verify which checking rules are fulfilled. Information concerning fulfillment of the checking rules is returned.

## Description

### FIELD OF THE INVENTION

The present invention generally relates to methods and computer program products for semantic checking of program code, and for example, to methods and computer program product for semantic checking of program code which references external domain-source-definitions.

### BACKGROUND OF THE INVENTION

In computer science, compilation means transforming a source code typically written in a high-level programming language into an object code, typically in machine language, that may be directly executed by a processor or a virtual machine. However, there are also compilers which translate from one high level language to another (cross compilers), or sometimes to an intermediate language that still needs further processing; these are usually referred to as cascaders.

Compilation includes both, syntactic and semantic checks of the program code to be translated. In the framework of syntactic checking, it is verified whether the program code to be translated may be generated by the formal grammar of the programming language in which the program code is written. A grammar of a programming language is a finite set of rules defining the typically infinite set of correct programs of the programming language. The test whether a given program is in accordance with a given grammar and indicating how the program may be derived from the grammar, i.e. calculating the syntactic tree of the program, is called "parsing". Parsing is, in a sense, the inverse of generating a program according to a grammar. The syntax of most programming languages is context-free, which is on level 2 of the Chomsky hierarchy (Chomsky N., professor emeritus of linguistics at Massachusetts Institute of Technology, see Hopcroft, J.E., Motwani, R., Ullman, J.D., "Introduction to Automata Theory, Languages and Computation", 2nd ed., 2001, Addison-Wesley, p. 191 - 194). A well-known and efficient algorithm for deciding whether a program belongs to a context-free grammar is the CYK algorithm, named after the three computer scientists J. Cocke, D. Younger and T. Kasami, each of whom independently discovered essentially the same idea. Essential parts of the syntax of programming languages may be represented by a context-free grammar which is usually written in Backus-Naur form, named after John Backus, an American computer scientist, and Peter Naur, a Danish computer scientist, who originally invented a formalism for describing the syntax of ALGOL 60.

Syntactic checking is followed by semantic checking which checks the general logic framework of the program, for instance, whether each identifier has been declared before it is assigned a value or whether an identifier is only assigned data according to its data type. These checks may be done by context-sensitive grammars which pertain to level 1 of the Chomsky hierarchy. However, the grammars would be more complicated for parsing so that semantic checks are typically performed by means of attribute grammars which are common means for representing the syntax and the semantics of a program.

It should be mentioned that most computer application-programs refer to some sort of external data. This data may be programming libraries containing special, for example mathematical, procedures that a programmer wants to use in his/her application-program. Programming libraries are typically available as object code and are linked into the computer programs by means of a linking procedure. External data may also be data stored in a database that a programmer wants to read or write in her/his program. For example, when writing data into a table of a database scheme, the compiler typically checks whether the number of arguments and the type of arguments of the writing-procedure used are in accordance with the prototype of the writing-procedure. However, it is only rarely checked whether the type of data used in the writing-procedure corresponds to the type of data designated in the definition of the table of the database scheme to which the user wants to write the data. As a compiler would not check this type of inconsistency, it would not notify the programmer about possible problems. If the program is run, however, this inconsistency may lead to a severe trouble and, in the worst case, to a system crash. Such unwanted system behavior may be obviated by means of semantic checks before run-time, after the actual compilation phase.

SQLJ is an embedded SQL (Structured Query Language, a query language for relational database management systems) for Java providing an SQLJ translator including a semantics-checker which verifies the validity of Java types in SQL operations and optionally connects to a database to check compatibility between Java types and SQL types. SQLJ checks SQL- executable statements against SQL types of corresponding columns in the database at compilation time. In the process of doing this, SQLJ verifies that the schema objects used in SQLJ executable statements (such as tables, views, and stored procedures) actually exist in the database. If any semantic errors are discovered by the semantics-checker, translation of the program code is aborted and errors are reported so that they can be remedied by a programmer before execution of the program.

Hewlett Packard's Opencall SLEL compiler also performs semantic checking of the protocol and message oriented instructions, with respect to the formal ASN.1 (Abstract Syntax Notation One)-based definitions of these protocols.

### SUMMARY OF THE INVENTION

A method is provided of checking program code of an appl ication-program which references external domain-source-definitions. The checking method pertains to the references from the application-program to the external domain-source-definitions and is performed by means of an inference engine being supplied with an application-program knowledge base, a domain-source-definition knowledge base and checking rules. The program code of the application-program is translated into the application-program knowledge base. The external domain-source-definitions are translated into the domain-source-definition knowledge base. Checking rules are defined and the inference engine is run on the application-program knowledge base, on the domain-source-definition knowledge base and on the defined checking rules in order to verify which checking rules are fulfilled. Finally, information concerning fulfillment of the checking rules is returned.

According to another aspect, a computer system is provided for checking program code of an application-program which references external domain-source-definitions. The checking method pertains to the references from the application-program to the external domain-source-definitions and is performed by means of an inference engine being supplied with an application-program knowledge base, a domain-source-definition knowledge base and checking rules. The computer system is programmed to translate the program code of the application-program into the application-program knowledge base. The external domain-source-definitions are translated into the domain-source-definition knowledge base. Checking rules are defined and the inference engine is run on the application-program knowledge base, on the domain-source-definition knowledge base and on the defined checking rules in order to verify which checking rules are fulfilled. Finally, information concerning fulfillment of the checking rules is returned.

According to another aspect, a computer program product is provided which is either in the form of a machine-readable medium with program code stored on it, or in the form of a propagated signal including a representation of program code. The program code is arranged to carry out a method, when executed on a computer system, of checking program code of an application-program, which references external domain-source-definitions. The checking method pertains to the references from the application-program to the external domain-source-definitions and is performed by means of an inference engine being supplied with an application-program knowledge base, a domain-source-definition knowledge base and checking rules. The program code of the application-program is translated into the application-program knowledge base. The external domain-source-definitions are translated into the domain-source-definition knowledge base. Checking rules are defined and the inference engine is run on the application-program knowledge base, on the domain-source-definition knowledge base and on the defined checking rules in order to verify which checking rules are fulfilled. Finally, information concerning fulfillment of the checking rules is returned.

Other features are inherent in the methods and products disclosed or will become apparent to those skilled in the art from the following detailed description of embodiments and its accompanying drawings.

### BRIEF DESCRIPTION OF THE DRAWINGS

Embodiments of the invention will now be described, by way of example, and with reference to the accompanying drawings, in which:
Fig. 1 shows typical phases of a compilation process and an appended post-compilation semantic checking phase, according to embodiments of the invention;
Fig. 2 illustrates a post-compilation semantic checking module, according to embodiments of the invention;
Fig. 3 shows extracts of an exemplary program code of an application-program in SDL, according to embodiments of the invention;
Fig. 4 shows the program code of the application-program translated into a PROLOG application-program knowledge base, according to embodiments of the invention;
Fig. 5 illustrates data from external domain-source-definitions translated into a PROLOG domain-source-definition knowledge base, according to embodiments of the invention;
Fig. 6 shows semantic checking rules entered by a user, according to embodiments of the invention;
Fig. 7 shows error messages returned by the post-compilation semantic checking module, according to embodiments of the invention; and
Fig. 8 displays a diagrammatic representation of an embodiment of a post-compilation semantic checking module, according to embodiments of the invention.

The drawings and the description of the drawings are of the embodiments of the invention and not of the invention itself.

### DESCRIPTION OF THE PREFERRED EMBODIMENTS

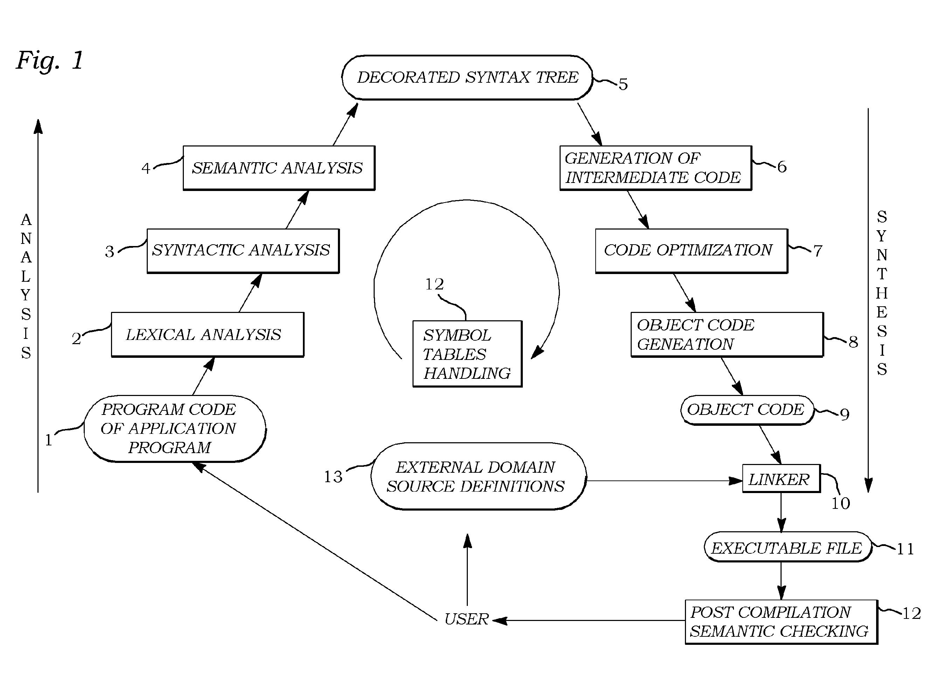

Fig. 1 shows typical phases of a compilation process, which additionally include a post-compilation semantic checking phase according to embodiments of the invention. However, before proceeding further with the description of Fig. 1, a few items of the embodiments will be discussed.

In some of the embodiments, program code of an application-program which references external domain-source-definitions is checked. The checking pertains to the references from the application-program to the external domain-source-definitions and is performed by means of an inference engine which is supplied with an application-program knowledge base, a domain-source-definition knowledge base and checking rules. The program code of the application-program is translated into the application-program knowledge base. The external domain-source-definitions are translated into the domain-source-definition knowledge base. Then, checking rules are defined. The inference engine is run on the application-program knowledge base, on the domain-source-definition knowledge base and on the defined checking rules in order to verify which checking rules are fulfilled. Finally, information concerning fulfillment of the checking rules is returned.

Typically, computer application-programs include in their program code some sort of reference to external data, such as databases or programming libraries. In this context, the computer application-programs write the result of their calculation into a database or take data from the database for processing purposes. SQL is a programming language which enables querying data stored in tables of relational databases. Another example of external data are programming libraries to which a programmer resorts in order to make use of special procedures, such as mathematical functions, or special sorts of data structures. These external data are typically invoked by some sort of "call" statement, which need not be explicitly denoted by the expression "call" but by some other expression, and represent a jump into the external data. Since an application-program processes data pertaining to a domain, i.e. the realm of the application-program, the external data are also referred to herein as domain-source-definitions since they represent the source of data of the domain processed by the application-program. In formal terms, a domain is a set of objects and relations, together with rules and facts about them. For example, the domain of network protocols includes protocols, messages, fields, encoding rules and decoding rules.

In some of the embodiments, the checking of the program code of the application-program with regard to references to external domain-source-definitions is performed after the actual compilation of the application-program. Therefore, a review of the compilation process is given before having a closer look at a post-compilation procedure, according to embodiments of the invention:

Phases of compilation are divided into an analysis phase and a synthesis phase. The analysis phase includes: lexical analysis, syntactic analysis and semantic analysis. The result of the analysis phase is a tree, which is transformed, in the synthesis phase, into program code of the object language, which is typically a machine language. The synthesis phase includes generation of intermediate code, program optimization and code generation. In the code generation phase, finally, program code of the object language is generated. If the object language is the machine language of the architecture to be run, an executable is generated. If the program code resorts to some external domain-source-definitions, an additional linking procedure additionally is performed, which links the compiled program code of the application-program together with the compiled program code of the external domain-source-definitions. Therefore, in some of the embodiments, a further phase is appended to the typical phases of compilation, which is called post-compilation semantic checking phase and extends the actual compilation process by some further checks which help the programmer to detect errors in the program code which result from resorting to data defined in the external domain-source-definitions which are not in accordance with data in the application-program. The programmer is provided with some error messages which help her/him to amend the program code in a way that the program code of the application-program does not resort to data of external domain-source-definitions that are not in accordance with data in the application-program due to, for example, type inconsistencies or non-existence of data in the external domain-source-definitions.

Given the source code of an application-program, the lexical analysis phase, which is actually performed by a scanner or lexer, splits the source code into so-called tokens (text strings belonging together) of different classes, such as key words, identifiers, numbers, operators. The syntax analysis checks whether the source code is formally correct, i.e. whether the source code corresponds to the grammar of the programming language in which the source code is written. As mentioned at the outset, the syntax of most programming languages complies with a context-free Chomsky-2 grammar, in particular LL(k) or LR(k) -grammars (see Hopcroft, J.E., Motwani, R., Ullman, J.D., "Introduction to Automata Theory, Languages, and Computation", 2nd ed., 2001, Addison-Wesley, p. 253) representing a subclass of context-free grammars, that may be parsed efficiently. The semantic analysis checks the static semantics, i.e. the general logical framework of the program code. For example, it is checked whether a variable has been declared before it is used, and a variable of a certain data type may only be assigned data of the corresponding data type. These checks may be realized by means of attribute grammars which means that the nodes of the derived syntax tree are associated with attributes containing semantic information. The output of the semantic analysis is referred to as a decorated syntax tree.

The synthesis phase starts with the generation of intermediate code which is a representation close to the machine code. The intermediate code is used as a basis for performing code-optimization. Generating intermediate code is preferably performed when a compiler offers the possibility to translate into several object platforms. The code-optimization phase aims to minimize the runtime of the individual program steps or the memory demand. Optimization is partly performed in dependence on properties of the hardware, e.g. how many and which registers the computer provides. Some optimizations require the compiler to transform program constructs into semantically equivalent, but more efficient ones. Optimization, in this context, does not mean that the program is optimal; but that the optimized code represents an improvement of the original program code. Briefly, reduction of machine instructions, elimination of "dead" program code (program code which is never run), identification of unused variables, optimization of loops, etc. are, in general, the aims in the framework of code-optimization. When generating object code, the actual program code in the target programming language is generated from the syntax tree. If the target language is the machine programming language, the result may be an object file which may lead to an executable file by linking with programming libraries or further object files.

A linker is a program which puts together individual program modules to an executable file. Most programs contain modules which may be used in other programs. Several compiled modules with functions (so-called object files) may be merged into a programming library. The code is added to the main program, if a function from the library is needed. To use a program module in another program, the symbolic addresses of the functions and variables of the modules have to be transformed into memory addresses. This task is performed by a linker. Linking is done after the actual compilation and is mostly the last step for the creation of an executable. A distinction is made between static and dynamic linking. Static linking is a procedure which is typically performed during the development of the program, so that the user gets a readily compiled program. This program includes one file in the context of completely statically linked programs.

It is also possible to defer the resolution of the function and variable names until the program is actually executed, as is the case in the context of "dynamically linked libraries" (DLL) or "shared libraries". Dynamic linking enables the library to be exchanged easily afterwards, the programs to become smaller and the memory to be needed only once when several programs use the same library. However, it has to be ensured that the right DLL is installed in the right version. Mixtures of the static and dynamic mode of linking are common.

In some of the embodiments, a program code of an application-program, which references external domain-source-definitions, is checked with regard to references from the application-program to the external domain-source-definitions. This check is performed by an inference engine which is capable of verifying whether rules pertaining to one or more given knowledge bases are fulfilled or not. One knowledge base is referred to as application-program knowledge base representing the application-program in a format readable by the inference engine, whereas the other knowledge base is referred to as domain-source-definition knowledge base and contains the data stored in the domain-source-definition in a format readable by the inference engine. Checking rules are also provided which represent the checks that a user wants to perform on the knowledge bases. Initially, the program code of the application-program is translated by means of an application compiler into the application-program knowledge base. It should be mentioned that the compiler translating the program code of the application-program into the application-program knowledge base is not the compiler that translates the program code of the application-program into machine language. Rather, the task of the application compiler is to transform the program code of the application-program into a format readable by the inference engine. In some of the embodiments, the output of the application compiler is therefore quite similar to the input program code of the application-program. Typically, semantic checking does not require the entire program code so that the application compiler is also responsible for filtering out instructions of the program code that are not required for semantic checking. Typically, the subset of instructions that are of interest for the semantic checking process is the declaration of constants, variables, procedures and procedure calls. Then, the data stored in the external domain-source-definitions is translated by a domain compiler into the domain-source-definition knowledge base, so that it is also readable by the inference engine. Subsequently, a user defines rules which s/he would like to have tested on the application-program knowledge base and the external domain-source-definitions. Then, the inference engine is run on the application-program knowledge base, the domain-source-definition knowledge base and the checking rules, normally defined by a user, in order to verify which checking rules are fulfilled. Then, the user gets an indication about which checking rules are fulfilled. More specifically, s/he gets error messages indicating, for instance, that a variable in the external domain-source-definitions referenced by the application-program does not exist, that a value that is to be set in the external domain-source-definitions is of another type than the one defined in the external database, or that data have not been initialized.

In some of the embodiments, the inference engine is a compiler or an interpreter of a declarative programming language. Incidentally, an interpreter is a computer program that executes other programs. This is in contrast to a compiler which does not execute its input program (the source code) but translates it into executable machine code (also called object code) which is output to a file for later execution. It may be possible to execute the same source code either directly by an interpreter or by compiling it and then executing the machine code produced. It takes longer to run a program under an interpreter than to run the compiled code but it may take less time to interpret it than the total time required to compile and run it.

A declarative programming language is a high level language that describes a problem in a formalized way rather than iteratively indicating step by step how to get to a solution. For instance, SQL belongs to the group of declarative programming languages. Declarative programming is in contrast to imperative programming via imperative programming languages (almost the same as procedural programming languages) where serial orders are given to a computer. Therefore, in some of the embodiments, a PROLOG compiler or interpreter is used as an inference engine.

PROLOG, which is considered to be both a declarative and a logic programming language (the name comes from the French "programmation en logique"), was created by Alain Colmerauer and Robert Kowalski around 1972 and is an attempt to make a programming language based on logical expressions that formalizes a problem instead of providing instructions that direct a computer to solve a problem, as problems are typically approached in a procedural programming language. PROLOG gained particular importance in the fields of artificial intelligence and computational linguistics. In the latter field, it is primarily used in the framework of syntactic and semantic analysis of natural languages. PROLOG is based on first-order predicate calculus. However it is restricted to the use of Horn clauses (named after the American mathematician Alfred Horn (1918-2001)) only which represent logical propositions of the following form:
(a AND b AND c AND d) implies u

In the syntax of PROLOG, the AND sentential connectives are represented as commas, and the "implies" (logical implication) is represented as ":-". The logical expression given above may therefore be noted down in PROLOG notation as:
u:- a, b, c, d.
u:- x, y, z.

The first PROLOG clause means that u is true, if a and b and c and d are true. The second PROLOG clause refers to an alternative since it has the same left side (head predicate) as the first PROLOG clause. Hence, u may also be evaluated to true, if x and y and z are true. This means that u can either be true, if a and b and c and d evaluates to true or if x and y and z evaluates to true. PROLOG programs include a knowledge base containing facts and a set of rules by means of which knowledge based upon the facts may be defined. A user may then formulate queries to the facts and rules. The PROLOG interpreter (the inference engine) uses the facts and rules to find answers systematically. A positive result in response to a query means that the answer may be logically inferred, whereas a negative answer solely means that, based on the facts provided in the knowledge base, no answer can be given. This is due to what is referred to as "closed world assumption" which states that everything that cannot be explicitly proved as true can be assumed to be false. In other words, everything which is not modeled does not exist in the model, and is therefore not provable, i.e. false. To illustrate the basic principles of PROLOG, an example is quoted.

An exemplary knowledge base contains the following facts:
father (mark, ann).
father (mark, john).
father (john, marvin).

The facts are given in the form of relations whose semantic is that Mark is father of Ann, Mark is father of John and John is father of Marvin. This is a small knowledge base to which a user may query question. For instance, a user wants to know whether Mark is the father of Marvin. To this end, s/he may type in a user interface:
?- father(mark, marvin).

Since the PROLOG inference engine is unable to verify this relation in the knowledge base, it will return no.

For example, when the user wants to figure out who the father of Mark is, then s/he may query:
?- father(mark, X).

It should be mentioned that, in accordance with PROLOG convention, the expressions in capital letters refer to variables, whereas the expressions in lowercase letters refer to atoms, which are constants. The PROLOG inference engine will make a check-up in the knowledge base to find a fact, by means of which it may unify the variable x. It finds appropriate fact relations and therefore returns:
X=anne;
X=j ohn;
No further solutions.

The ";" operator is manually entered by a user and triggers the inference engine to search for further, alternative solutions.

Rules may also be added to the knowledge base. For example:
grandfather(X,Y):-father(X,Z), father (Z, Y).

After providing this rule to the inference engine, a user may query:
?- grandfather(mark, marvin).

Since the inference engine is able to find relations in the knowledge base that comply with the query, it will answer:
Yes.

Since PROLOG, in contrast to procedural programming languages, does not provide any loop - constructs, such as for-, or while-loops, a programmer has to extensively make use of recursive rule definitions. PROLOG, like many functional and other logic programming languages, also relies heavily on lists which are recursively processed. In summary, it may be ascertained that the PROLOG programming language provides a comfortable way of defining rules and verifying whether facts defined in a knowledge base are able to fulfill the rules.

In some of the embodiments, the external domain-source-definitions form a programming library which includes functions, constants and data structures, to which the application-program resorts, whereas in other embodiments, the external domain-source-definitions pertain to data stored in a database system. In a relational database scheme, the data may be organized in tables and may provide information concerning a domain, which is the semantic realm to which the data stored in the database system relates. In some of the embodiments, the external domain-source-definitions form a definition of a protocol set, which may be written in ASN.1.

In some of the embodiments, the checking rules defined by a user are semantic checking rules which check whether conditions relating to the references from the application-program to the domain-source-definitions are fulfilled.

In other embodiments, the checking rules are amended by the user by means of an editor. This feature enables a flexible adaptation of the checking rules according to the wishes of the user, in particular with respect to the domain of the application-program.

In some of the embodiments, the checking of the program code is done after the compilation of the application-program into machine language. Therefore, the checking is referred to as a post-compilation semantic checking procedure. If information concerning fulfillment of the checking rules contains error messages, then a user is enabled to amend the program code of the application-program and/or the external domain-source-definitions (if s/he has access to them which is not necessarily the case with programming libraries which are typically only available in a precompiled form in machine language) in that s/he remedies the errors indicated by the post-compilation semantic checking procedure. The amended program code may then be recompiled and the post-compilation semantic checking procedure may again be applied to the amended program code of the application-program and the external domain-source-definitions. This procedure may be iteratively repeated until the post-compilation semantic checking procedure does not indicate any error messages anymore.

Some of the embodiments of the computer program product with program code for performing the described methods include any machine-readable medium that is capable of storing or encoding the program code. The term "machine-readable medium" shall accordingly be taken to include, for example, solid state memories and, removable and non-removable, optical and magnetic storage media. In other embodiments, the computer program product is in the form of a propagated signal comprising a representation of the program code, which is increasingly becoming the usual way to distribute software. The signal is, for example, carried on an electromagnetic wave, e.g. transmitted over a copper cable or through the air, or a light wave transmitted through an optical fiber. The program code may be machine code or another code which can be converted into machine code, such as source code in a multi-purpose programming language, e.g. C, C++, Java, C#, etc. The embodiments of a computer system may be commercially available general-purpose computers programmed with the program code.

Returning now to Fig. 1 which shows typical phases of a compilation process (1-9) of a program code of an application-program 1 which references external domain-source-definitions 9. In the present example, a program code written in SDL is considered to be the program code of the application-program 1. SDL (short for Specification and Description Language) is a specification language targeted at the unambiguous specification and description of the behavior of reactive and distributed systems. SDL has been developed by ITU-T (International Telecommunication Union) and is currently used by Telelogic Tau software. Originally focused on telecommunication systems, its current areas of application include process control and real-time applications in general.

After the actual compilation yielding a object code 9 in machine language, a post-compilation semantic checking phase 12 is appended which verifies whether the program code of the application-program 1 and the external domain-source-definitions 13, which may, for instance, be any sort of database or an external programming library, are in accordance with each other, i.e., for example, whether the program code of the application-program 1 exclusively makes references to variables, objects, functions, etc. of the external domain-source-definitions 13 which really exist.

The compilation is divided into an analysis phase, also referred to as the front end of the compilation, and a synthesis phase, also referred to as the back end. The analysis phase aims to generate a decorated syntax tree 5 which serves as a launching pad for generating code in the machine language in the subsequent synthesis phase.

Lexical analysis 2, which is the first iteration of the analysis phase and is performed by lexers or scanners, translates the incoming stream of characters into tokens, which are lexical units such as identifiers, numbers, operators, keywords, etc. Comments, included by a programmer into the program code to render the code better legible and comprehensible, and irrelevant signs are removed. Scanners are typically implemented as finite automata or regular expressions which are two equivalent representations of the same class of languages (regular languages, Chomsky 3 languages).

The stream of tokens is handed over to a syntactic analysis 3, performed by a parser. The syntactic analysis 3 refers to the recognition of tokens with a significance in the language. It further refers to the recognition, localization, and diagnosis of syntax errors. The output of the syntactic analysis 3 phase is a tree, in which the tokens of the program code 1 represent the leaves of the tree, and the rest of the syntax tree refers to syntactic categories indicating the syntactic structure of the program code.

Subsequently, a semantic analysis 4 is performed in which semantic information is added to the nodes of the syntax tree. Typical examples of semantic information that is added and checked is typing information (type checking) and the binding of variables and function names to their definitions (object binding). The result of the semantic analysis 4 is a decorated syntax tree 5.

After the decorated syntax tree 5 has been generated, the synthesis phase begins which decomposes the structure of the decorated syntax tree 5 into a sequence of instructions of the object code 9. The form of the internal representation varies widely. If the back end is called as a subroutine by the front end then the intermediate representation is likely to be some form of annotated parse tree, possibly with supplementary tables. If the back end operates as a separate program then the intermediate representation is likely to be some low-level pseudo assembly language or some register transfer language (it could be just numbers, but debugging is easier if it is human-readable).

The general idea behind code generation is to decompose the tree structure of the decorated syntax tree 5 into a sequence of instructions. In this stage, since the semantic program has already been generated, neither the syntactic nor semantic structure of programs is of interest but rather the order of executions of instructions. Sometimes it may be beneficial to output some sort of intermediate code which is often produced before generating actual machine code. The benefits of this are that it is easier to generate more abstract code, without needing to bother too much about things like register allocations. Optimization independent of the machine architecture can be done and compiler bugs may be spotted more easily.

After the generation of intermediate code 6, there follows a code-optimization phase 7. This phase aims at improving the object code rather than optimizing it since perfect code is hardly possible. The improvement may either be directed towards a program code with reduced execution time or towards an object code that requires less memory.

After that, object code generation 8 is performed which outputs the object code 9. The object code generation 8 is followed by a linking phase. A linker 10 is a program that takes one or more objects generated by compilers and assembles them into a single executable file 11. The objects are program modules containing machine code and information for the linker. This information comes mainly in the form of symbol definitions, which arise in two varieties: defined or exported symbols are functions or variables that are present in the module represented by the object, and which should be available for use by other modules. Undefined or imported symbols are functions or variables that are called or referenced by this object, but not internally defined. This data stems from external domain-source-definitions 13.

Briefly, the linker's job is to resolve references to undefined symbols by finding out which other object defines a symbol in question, and replacing placeholders with the symbol's address. Linkers may take objects from a programming library. The advantage of such a collection over a single big object is that the final program does not include the whole programming library, only those objects from it that are needed. Programming libraries for diverse purposes exist, and one or more system libraries are usually linked in by default. The linker 10 also arranges the objects in a program's address space. This may involve relocating code that assumes a specific base address to another base. Since a compiler seldom knows where an object will reside, it often assumes a fixed base location (for example, zero). Relocating machine code may involve re-targeting of absolute jumps, loads and stores. The executable output by the linker may need another relocation pass when it is finally loaded into memory (just before execution).

It should be mentioned that during the entire compilation procedure, symbol tables are required. In computer science, a symbol table is a data structure used by a compiler. Each symbol in the source code obtains an entry with indications, such as location in the source code, data type and pointer to a structure in the memory. Mostly, a hash table is used for implementation of the symbol table. It may be built up temporarily during translation or it is maintained for a longer period of time to facilitate a later debugging. All operations performed on the symbol tables are referred to as symbol tables handling 12.

Moreover, the linker 10 does not perform any further checks as to whether the calls made in the application-program code 1 reference variables that really exist. To this end, a post-compilation semantic checking phase 12 is appended which gets the program code of the application-program 1 and the external domain-source-definitions 13 as input and outputs information on whether the cross references between the external domain-source-definitions 13 and the program code of the application-program 1 are all right. It should be mentioned that the arrow in Fig. 1 between the executable file 11 and the post-compilation semantic checking phase 12 does not indicate that the post-compilation semantic checking phase 12 is performed on the executable file 11 but rather that it is performed temporarily after the executable file 11 has been produced. The output of the post-compilation semantic checking phase 12, which are error messages, is used by a user to amend the program code of the application-program 1 and the external domain-source-definitions 13 to obviate error messages yielded by the post-compilation semantic checking phase 12. The post-compilation semantic checking phase 12 will be elucidated in more detail by means of the following figures.

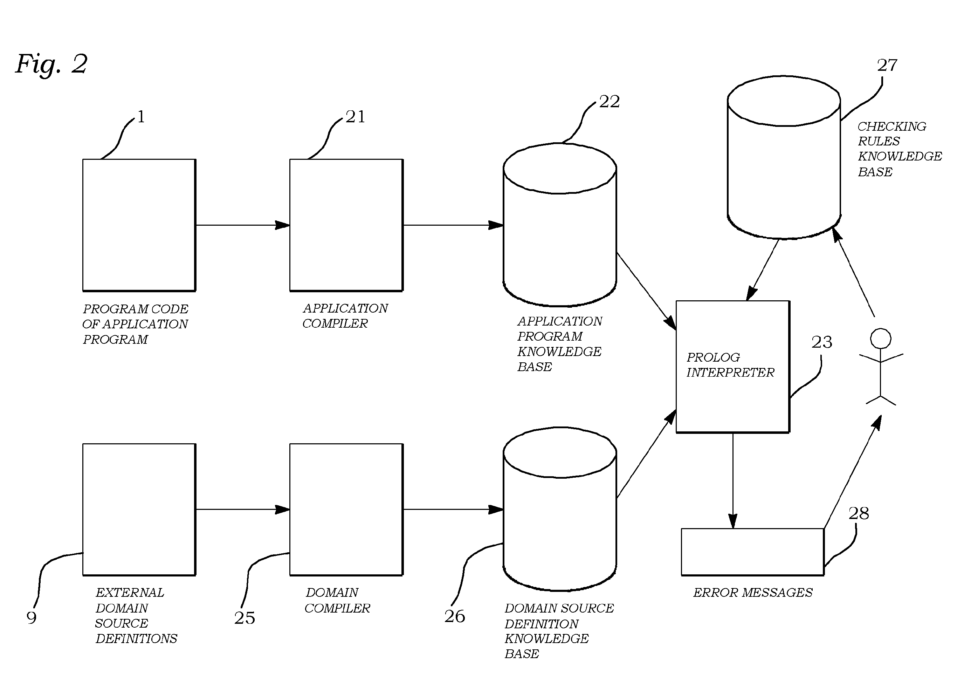

Fig. 2 provides a closer look at the post-compilation semantic checking phase 12. The program code of the application-program 1 is provided in SDL which is a telecommunication programming language. The program code 1 is passed to an application compiler 21 which translates the SDL program code into a PROLOG application-program knowledge base 22. It should be mentioned that this compilation has nothing to do with the compilation of the program code 1 into the object code 9 as illustrated in Fig. 1, but refers to the translation of the program code written in SDL into a knowledge base in PROLOG format, to render the SDL program code processable by a PROLOG interpreter 23. Since the SDL program code of the application-program 1 references procedures and data outside its actual program code 1, this data also has to be included into the checking process. To this end, external domain-source-definitions 13 which constitute the data to which the program code of the application-program 1 resorts, are presented to a domain compiler 25 which translates the external domain-source-definitions 13 into a domain-source-definition knowledge base 26 in PROLOG format so that it also becomes processable. At this stage, the program code of the application-program 1 and the external domain-source-definitions 13 are available in PROLOG-readable format and may be processed by the PROLOG interpreter 23. To this end, a user defines checking rules 27 in a further knowledge base (checking rules knowledge base) which s/he would like to have tested with regard to the program code of the application-program 1 in the interplay with the external domain-source-definitions 13. The checking rules 27 are written in PROLOG and denote semantic conditions that are to be tested. The checking rules 27 test, for instance, whether a variable, which is invoked from the program code of the application-program 1, is defined within the external domain-source-definitions 13. Hence, it tests the existence of an explicitly named item in the external domain-source-definitions 13, such as ASN.1 (Abstract Syntax Notation One) protocols, messages and fields. In telecommunications and computer networking ASN.1 is a standard and flexible notation that describes data structures for representing, encoding, transmitting, and decoding data. It provides a set of formal rules for describing the structure of the objects that are independent of machine-specific encoding techniques and is a precise, formal notation that removes ambiguities.

The checking rules 27 also verify the consistency between types of named items (database columns and message fields) and the application-program variables in assignment-like statements. Normally, a compiler only reads from "call" statements in application-programs the names of such items, but usually it ignores whether the variables really exist. It should be mentioned that typical compilers only perform type and order checking on the parameters of external calls. Value and type checking beyond the call statement is domain dependent. Thus, a universal, domain-independent compiler cannot perform them.

After the checking rules in the knowledge base 27 have been applied to the application-program knowledge base 22 and the domain-source-definition knowledge base 26, error messages 28 are displayed to the user which indicate that a variable which has been invoked by a call statement does not exist, or that - in the case of SDL - a protocol has not been initialized. According to the errors displayed, the developer may then adapt the program code of the application-program 1 and the external domain-source-definitions 13, if s/he has access to them, in order to remedy the errors displayed.

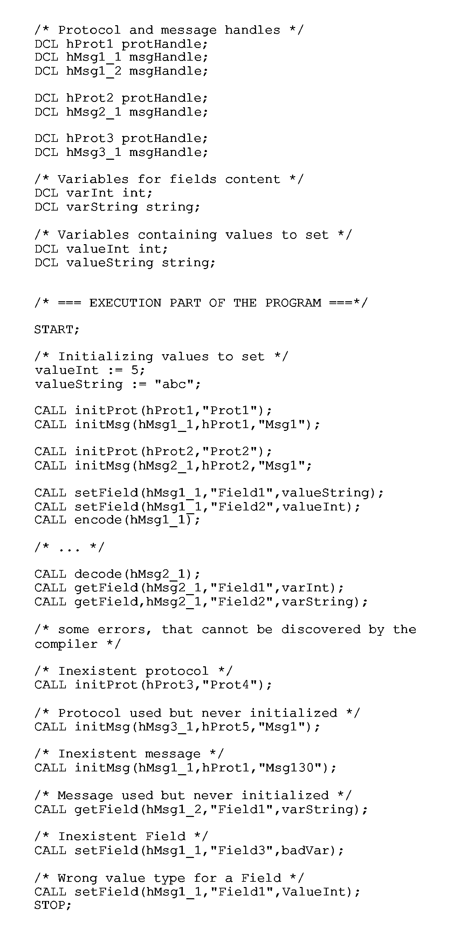

In order to illustrate the principles of the post-compilation semantic checking 12, an extract from a telecommunication service program, written in SDL and using ASN.1-defined protocols is shown in Fig. 3. Some of the statements are correct, whereas others are erroneous. In the program, protocols occur that encode and decode messages that are associated with the protocols. In the paragraph "protocol and message handles" (Fig. 3, lines 1 to 8), three protocols and four messages associated with the protocols are declared. This is indicated by the command "DCL" which refers to the declaration of protocols and messages. A "handle", as used herein, is a variable by means of which a protocol or message is referenced. The first protocol, referenced by hProt1 of type protHandle, includes two messages, referenced by hMsg1_1 and hMsg1_2. The second and the third protocol are associated with one message each. Then, an integer variable varInt and a string variable varString for fields content of a message are declared. A field references a piece of memory to which data may be assigned. An integer variable valueInt and a string variable valueString are defined which contain values that may be set in the external domain-source-definitions 13 under the variable "Field1". It should be mentioned that the names of objects, such as protocols, messages and fields which are defined in the external domain-source-definitions 13 are put in inverted commas.

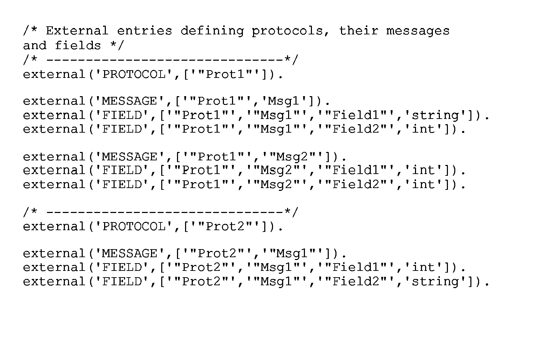

The declaration part of the program code is followed by an execution part (Fig. 3, lines 15 to 44). The integer and string variables to set, valueInt and valueString, are initialized. Then, external functions are called by a "CALL"-statement in order to initialize the protocols and messages and to fill the fields of the messages with data. The initializations (Fig. 3, lines 20 to 24) serve to make references from the declared variables to the protocol, message and field objects defined in the external domain-source-definitions 13, as illustrated in Fig. 5. Then, the first message associated with the first protocol is encoded, which is also performed via a "CALL" statement (line 26). The first message associated with the second protocol is decoded (Fig. 3, line 28) and the value is written from "Field1" and "Field2" into the variables varInt and varString.

In the next paragraph, some errors are listed that cannot be discovered by normal compilers. The statement CALL initProt(hProt3",Prot4") refers to a protocol "Prot4" which is not defined in the external domain-source-definitions 13, as illustrated in Fig. 5. However, a normal compiler without post-compilation semantic checking 12 would not detect the error since the number of arguments and the types of the arguments are in accordance with the procedure prototype of the procedure initProt(). (A procedure prototype indicates the number and types of arguments expected by the function.) Hence, this protocol is inexistent and would cause trouble when executing the program.

In the next erroneous statement, the variable hProt5 has not been initialized by a CALL initProt-statement.

In the following statement, "Msg130" is not existent because it is not defined in the domain-source-definition knowledge base 26.

In the following statement, the variable hMsg1_2 has been declared, but it has never been initialized with data from the external data knowledge base 26.

The object name "Field3" refers to an inexistent field since "Field3" is not defined in the domain-source-definition knowledge base 26.

The last erroneous statement wants to set an integer valueInt to "Field1" of the first message of the first protocol. This field, however, is defined as a field for string information so that assigning an integer would cause trouble that a normal compiler would not notice during its compilation since the arguments are declared and the number, order and types of arguments are in accordance with the procedure prototype of the procedure setField, which is PROCEDURE CALL setField(msgHandle,string,int).

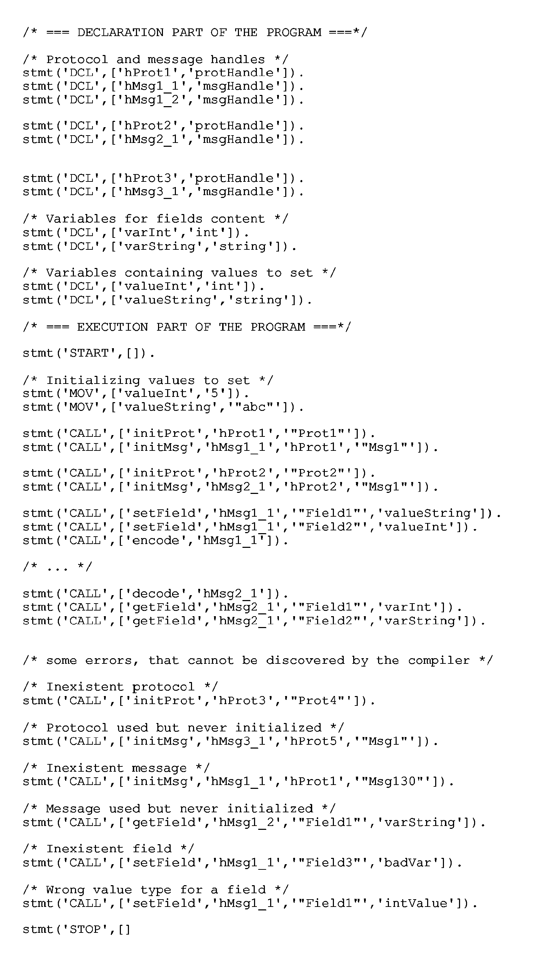

Fig. 4 illustrates the program code of the application-program 1 after it has been compiled by the application compiler 21. Fig. 4 shows the content of the application-program knowledge base 22 in PROLOG format. All facts are represented by propositions of the format stmt (statement-type, [parameter-1, ..., parameter-n]). This format is not very far from the machine code generated by the compiler which translates the program code of the application-program 1 into object code 9 (apart from the fact that it is not binary and is human-readable), which is <instruction code><arg1>...<argn>. So, the mechanism of the generation of the application-program knowledge base 22, which is performed by an application compiler 21, is similar to that of the machine code generation by the compiler (as depicted in Fig. 1 (1-9)). Therefore, as mentioned above, that the application compiler 21 does not translate the SDL program code 1 into the object code 9, but transforms the SDL program code 1 into a representation as it can be processed by a PROLOG interpreter, namely into the application-program knowledge base 22. In the given example, the program code of the application-program 1 is translated into a flat set of stmt ( ) facts. However, in more complex applications it is more appropriate to add, as an extension, the notion of module, instruction block or some other program structuring notions.

Fig. 5 illustrates the domain-source-definition knowledge base 26 which includes PROLOG propositions derived from the external domain-source-definitions 13 which have been translated by the domain compiler 25. Two protocol objects are defined "Prot1" and "Prot2", whereby two message objects "Msg1" and "Msg2" are associated with the first protocol. The first message has a first field, "Field1", designated for a string, and a second field "Field2" for an integer. The second message "Msg2" has two fields for integer data. The second protocol is made up of one message which has two fields. One field is reserved for an integer, and one field is reserved for a string.

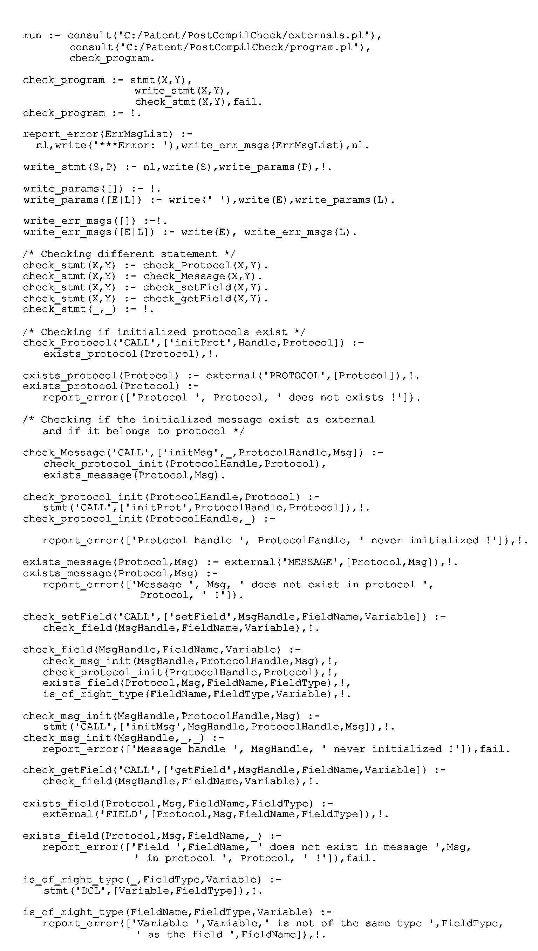

Fig. 6 shows a PROLOG program containing checking rules 27 which operate on the application-program knowledge base 22 and the external data knowledge base 26. In the first rule, the two knowledge bases "externals.pl" and "program.pl" are loaded and check_program is invoked.

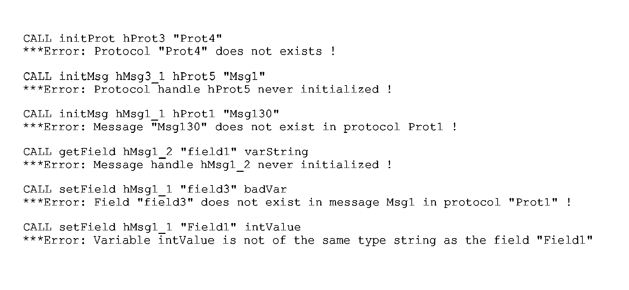

Fig. 7 shows the error messages 28 that are displayed to the user when running the program. The first error message indicates that protocol object "Prot4" does not exist in the domain-source-definition knowledge base 26 (and therefore not in the external domain-source-definitions 13). This error is detected by PROLOG rule exists_protocol (Protocol) (Fig. 6, lines 24 to 26).

The second error message refers to the fact that protocol handle hProt5 has never been initialized which is detected by the rule check_protocol_init (Fig. 6, lines 32 to 35).

The third error message refers to the fact that a "Msg130" does not exist in the external domain-source-definitions 13. This error is detected by the rule exists_message (Protocol, Msg) (Fig. 6, lines 36 to 39) which tries to find the message in the domain-source-definition knowledge base 26.

The fourth error message indicates that the message handle hMsg1_2 has been initialized, because there is no CALL statement initMsg(hMsg1_2,..,..). This error is detected by the check_msg_init (lines 47 to 50) that verifies whether a CALL statement invoking an initMsg function with hMsg1_2 is existent in the program code.

The fifth error message indicates that the field "Field3" does not exist in "Msg1" in protocol object "Prot1". This is found out by the PROLOG rule exists_field (Protocol, Msg, FieldName, FieldType) (lines 53 to 57) which checks the domain-source-definition knowledge base 26 on whether "Field3" exists in message object "Msg1" in protocol object "Prot1".

Finally, the sixth error message refers to the fact that the variable valueInt, which is of type integer, cannot be assigned to "Field1" of "Msg1" of "Prot1", because a string value is designated for "Field1" of "Msg1" of "Prot1". This error is figured out by means of rule is_of_right_type(FieidName, FieldType, Variable) (lines 58 to 62).

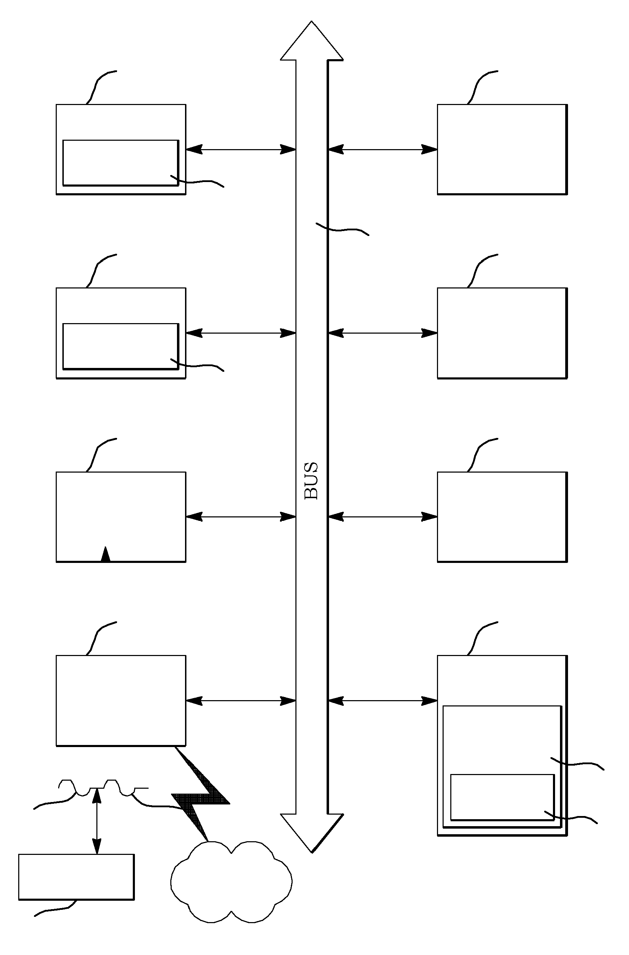

Fig. 8 is a diagrammatic representation of a computer system which provides the functionality of the post-compilation semantic checking module of Fig. 2, and is therefore denoted as "post-compilation semantic checking computer system". Within the post-compilation semantic checking computer system a set of instructions, for causing the computer system to perform any of the methodologies discussed herein, may be executed. The post-compilation semantic checking computer system includes a processor 30, a main memory 31 and a network interface device 32, which communicate with each other via a bus 33. Optionally, it may further include a static memory 34 and a disk drive unit 35. A video display 36, an alpha-numeric input device 37 and a cursor control device 38 may form a post-compilation semantic checking user interface. The network interface device 53 connects the post-compilation semantic checking computer system to an IT network. A set of instructions (i.e. software) 39 embodying any one, or all, of the methodologies described above, resides completely, or at least partially, in or on a machine-readable medium, e.g. the main memory 31 and/or the processor 30. A machine-readable medium on which the software 39 resides may also be a data carrier 40 (e.g. a non-removable magnetic hard disk or an optical or magnetic removable disk) which is part of disk drive unit 35. The software 39 may further be transmitted or received as a propagated signal 41 via the Internet and the IT network through the network interface device 32.

Thus, the described embodiments of post-compilation semantic checking enable checking of references between an application-program and external domain-source-definitions.

All publications and existing systems mentioned in this specification are herein incorporated by reference.

Although certain methods and products constructed in accordance with the teachings of the invention have been described herein, the scope of coverage of this patent is not limited thereto. On the contrary, this patent covers all embodiments of the teachings of the invention fairly falling within the scope of the appended claims either literally or under the doctrine of equivalents.

## Claims

1. A method of checking program code of an application-program which references external domain-source-definitions, the checking method pertaining to the references from the application-program to the external domain-source-definitions and being performed by means of an inference engine being supplied with an application-program knowledge base, a domain-source-definition knowledge base and checking rules, the method comprising:
translating the program code of the application-program into the application-program knowledge base,
translating the external domain-source-definitions into the domain-source-definition knowledge base,
defining checking rules,
running the inference engine on the application-program knowledge base, on the domain-source-definition knowledge base and on the defined checking rules in order to verify which checking rules are fulfilled, and
returning information concerning fulfillment of the checking rules.

2. The method of claim 1, wherein the inference engine is a compiler or interpreter of a declarative programming language.

3. The method of claim 2, wherein the declarative programming language is PROLOG.

4. The method of any one of the claims 1 to 3, wherein the external domain-source-definitions form a programming library.

5. The method of any one of the claims 1 to 3, wherein the external domain-source-definitions form a database.

6. The method of any one of the claims 1 to 3, wherein the external domain-source-definitions form a definition of a protocol set.

7. The method of any one of claims 1 to 6, wherein the checking rules are semantic checking rules.

8. The method of any one of claims 1 to 7, wherein the checking rules are modifiable by a user.

9. The method of any one of claims 1 to 8, wherein the checking rules verify whether data in the domain-source-definition, referenced by the application-program, exists.

10. The method of any one of claims 1 to 9, wherein the checking is performed in addition to a compilation procedure of the application-program.

11. The method of any one of claims 1 to 10, wherein a user, in response to the information concerning fulfillment of the checking rules comprising error messages, is enabled to amend the program code of the application-program to remedy the error messages.

12. A computer system for checking program code of an application-program, which references external domain-source-definitions, the checking method pertaining to the references from the application-program to the external domain-source-definitions and being performed by means of an inference engine being supplied with an application-program knowledge base, a domain-source-definition knowledge base and checking rules, the computer system being programmed to:
translate the program code of the application-program into the application-program knowledge base,
translate the external domain-source-definitions into the domain-source-definition knowledge base,
define checking rules,
run the inference engine on the application-program knowledge base, on the domain-source-definition knowledge base and on the defined checking rules in order to verify which check rules are fulfilled, and
return information concerning fulfillment of the checking rules.

13. A computer program comprising a representation of program code,
wherein the program code is arranged to carry out a method, when executed on a computer system, of checking program code of an application-program, which references external domain-source-definitions, the checking method pertaining to the references from the application-program to the external domain-source-definitions, the method being performed by means of an inference engine being supplied with an application-program knowledge base, a domain-source-definition knowledge base and checking rules, the method comprising:
translating the program code of the application-program into the application-program knowledge base,
translating the external domain-source-definitions into the domain-source-definition knowledge base,
defining checking rules,
running the inference engine on the application-program knowledge base, on the domain-source-definition knowledge base and on the defined checking rules in order to verify which checking rules are fulfilled, and
returning information concerning fulfillment of the checking rules.
